# EUROPÄISCHE PATENTANMELDUNG

(11) **EP 2 599 855 A1**
(43) Veröffentlichungstag der Anmeldung: **05.06.2013**
(21) Anmeldenummer: 12194802.0
(22) Anmeldetag: 29.11.2012
(51) Int. Cl.: C12C 5/02, C12G 3/06

(54) **Biermischgetränk**

(30) Priorität: 29.11.2011 DE 202011108449 U
(71) Anmelder: Aktienbrauerei Kaufbeuren AG, 87600 Kaufbeuren (DE)
(72) Erfinder: Braun, Frank, 87600 Kaufbeueren-Neugablonz (DE); Trick, Bernd, 87600 Kaufbeueren (DE)
(74) Vertreter: Alber, Norbert

(57) **Zusammenfassung**

Biermischgetränk, welches trotz unterschiedlicher enthaltener Aromen die einzelnen Aromaanteile erschmecken lässt, insbesondere im trinkfertig erhitzen Zustand, und in diesem trinkfertig erhitzen Zustand auch den Geschmack von Alkohol erkennen lässt sowie eine spürbare Menge an Kohlensäure, bestehend aus mindestens 90 Vol.-%, besser mindestens 93 Vol.-%, besser mindestens 95 Vol.-% Bier, und Zucker in flüssiger Form mit mindestens 2,5 Vol.-%, besser mindestens 3,0 Vol.-%, aber höchstens 5,0 Vol.-%, besser höchstens 4,0 Vol.-%, Aroma, das den restlichen Volumenanteil des Biermischgetränkes darstellt.

## Beschreibung

### I. Anwendungsgebiet

Die Erfindung betrifft den Bereich der Biere und Biermischgetränke.

### II. Technischer Hintergrund

Bier besteht - zumindest in Deutschland aufgrund des hier geltenden Reinheitsgebotes - lediglich aus den Zutaten Hopfen, Malz, Wasser und gegebenenfalls Hefe.

Dennoch unterscheiden sich die einzelnen Biersorten drastisch voneinander hinsichtlich Geschmack, Alkoholgehalt, Schaumbildung und darüber hinaus auch bei anderen Parametern wie etwa der Haltbarkeit.

Neben dem reinen Bier sind auch vielfältige Biermischgetränke bekannt:
Als alkoholarmes, durstlöschendes Mischgetränk ist seit vielen Jahrzehnten ein Gemisch aus Zitronenlimonade und Bier etwa im Verhältnis 50:50 als Radler oder Alsterwasser bekannt.

Des Weiteren sind in den letzten Jahren andere Biermischgetränke auf dem Vormarsch, bei denen dem Bier meist Fruchtsaftanteile wie Limette, Zitrone, Orange, Grapefruit, Feige o.ä. zugesetzt werden, insbesondere als echter Saftanteil, vor allem um dem Mischgetränk - neben einem niedrigeren Alkoholgehalt gegenüber Bier - einen frischen, fruchtigen, Geschmack zu verleihen.

Bei diesen Biermischgetränken beträgt der Volumenanteil an alkoholfreien Bestandteilen mindestens 20%, meistens mehr als 30% und häufig 50%.

Eine andere Gruppe von Biermischgetränken sind aromatisierte Biere, wobei hier traditionell beispielsweise Ingwer-Bier in asiatischen Staaten bekannt ist:
Dabei werden dem Bier lediglich Aromastoffe in dementsprechend geringen Volumenanteilen zugesetzt, so dass der Gehalt an Bier bei in der Regel über 90%, häufig sogar über 95% oder gar 98% liegt.

Daher bewegt sich der Alkoholgehalt in der Nähe des Alkoholgehaltes des als Basis verwendeten Bieres.

Des Weiteren ist es bekannt, Bier erhitzt auf Trinktemperatur von ca. 30° bis 40° zu konsumieren. Einerseits gilt dies als Hausmittel gegen Erkältungskrankheiten insbesondere im Hals- und Rachenraum, andererseits wird heißes Bier und auch heißes aromatisiertes Bier im Winter bei niedrigen Außentemperaturen konsumiert, wobei dann der Alkoholgehalt aufgrund des Erhitzens schnell gegenüber dem ursprünglichen Alkoholgehalt absinkt, zumindest wenn das Getränk auf 60° C und mehr erhitzt wird, was häufig der Fall ist.

Die Folge ist, dass das zugesetzte Aroma zu schmecken ist, der typische Alkoholgeschmack jedoch weitgehend verloren geht. Auch die ursprünglich enthaltene Kohlensäure, meist 3% bis 5%, gast beim Erhitzen aus, so dass eine starke Schaumbildung die Folge ist.

Darüber hinaus sind aromatisierte Biere bisher in der Regel auf ein einziges bestimmtes Aroma komponiert worden.

### III. Darstellung der Erfindung

### a) Technische Aufgabe

Es ist daher die Aufgabe gemäß der Erfindung, ein Biermischgetränk zur Verfügung zu stellen, welches trotz unterschiedlicher enthaltener Aromen die einzelnen Aromaanteile erschmecken lässt, insbesondere im trinkfertig erhitzen Zustand, und in diesem trinkfertig erhitzen Zustand auch den Geschmack von Alkohol erkennen lässt sowie eine spürbare Menge an Kohlensäure.

### b) Lösung der Aufgabe

Diese Aufgabe wird durch die Merkmale des Anspruches 1 gelöst. Vorteilhafte Ausführungsformen ergeben sich aus den Unteransprüchen.

Durch die Zusammensetzung des Mischgetränks mit Aromen, etwas Zucker und im Wesentlichen Bier, wird der Biergeschmack und auch der Alkoholgehalt nur wenig reduziert und verwässert und bleibt weitestgehend erhalten.

Eine wichtige Rolle spielt auch der CO₂-Gehalt:
Die bei Bier übliche Menge von 500 g CO₂/hl ergibt bei einem kalten Bier die richtige, gewünschte Schaummenge, die jedoch durch Erwärmen so stark ansteigt, dass sie als unangenehm empfunden wird, da man fast nur noch Schaum trinkt.

Deshalb ist ein CO₂-Gehalt zwischen 200 und 400, besser zwischen 280 und 330 g/hl genau der geeignete Kompromiss beim Erwärmen auf Trinktemperatur.

Vor allem, wenn als Basis für das Mischgetränk ein Bier mit mind. 8 Vol.-%, besser 10 Vol.-% oder gar 11 Vol.-% Alkohol verwendet wird, beispielsweise ein Bockbier, sinkt dieser Alkoholgehalt - abhängig von der erreichten Höchsttemperatur beim Erhitzen - nur relativ geringfügig ab, sodass auch der Alkoholgehalt und auch der Geschmack des Alkohols aus dem Bier weitestgehend bei dem Mischgetränk erhalten bleibt.

Der Zusatz von 2,5 bis 5 Vol.-%, besser zwischen 3,0 Vol.-% und 4,0 Vol.-% an Zucker bringt die für das Trinken im erhitzten Zustand für die meisten Verbraucher notwendige zusätzliche Süße, ohne das Getränk zu weit von dem ursprünglichen Biergeschmack zu entfernen.

Indem der Zuckeranteil in Form von flüssigem Zuckersirup, insbesondere als Invertzuckersirup, zugegeben wird, ist die gleichmäßige Verteilung und Lösung gewährleistet. Vorzugsweise wird dabei ein Zuckergehalt des Zuckersirups zwischen 65 und 75 Vol.-% gewählt, der standardmäßig und kostengünstig verfügbar ist.

Das zugegebene Aroma enthält entweder Glühweinaroma, welches eine Aromenmischung ist, oder die wichtigsten Einzelbestandteile eines Glühweinaromas, nämlich Zimtaroma, Koreanderaroma und Orangenaroma separat, oder beides nebeneinander.

Vor allem wenn das Glühweinaroma und die Einzelbestandteile - wie oben genannt - parallel verwendet werden, liegt die Menge an Glühweinaroma zwischen 0,015 Vol.-% und 0,025 Vol.-% des Biermischgetränkes.

Die Einzelbestandteile Zimtaroma, Koreanderaroma, Orangenaroma, vor allem wenn sie zusätzlich zu der Aromenmischung des Glühweinaromas eingesetzt werden, betragen in Summe 0,05 Vol.-% bis 0,06 Vol.-% bezogen auf die Gesamtmenge.

Dabei ist der Anteil an Zimtaroma vorzugsweise 1,8 bis 2,2-fach so hoch wie der Anteil an Korianderaroma. Der Anteil an Orangenaroma ist 0,09 bis 0,11-fach so hoch wie der Anteil an Koreanderaroma.

Der Anteil an Orangenaroma ist 0,04-fach bis 0,06-fach so hoch wie der Anteil an Zimtaroma.

Mit diesen Mengenangaben lässt sich eine Geschmacksrichtung erzielen, die als "weihnachtlich" eingestuft wird, ohne zu aufdringlich zu sein und ohne nach dem Verzehr zu lange einen Nachgeschmack im Mund zurückzulassen.

Gleiches gilt für das Backpflaumenaroma, welches vorzugsweise mit einem Anteil von 0,15 bis 0,25 des Anteils an Glühweinaroma verwendet wird.

Falls Ingweraroma ebenfalls enthalten ist, ist dessen Anteil 0,04 Vol.-% bis 0,05 Vol.-% bezogen auf die Gesamtmenge und/oder das 1,5-fache bis 2,0-fache der Menge des Glühweinaromas.

Vorzugsweise besteht das zugegebene Aroma aus Ingweraroma, Koreanderaroma, Zimtaroma, Glühweinaroma, Backpflaumenaroma und Orangenaroma, wobei insbesondere Ingweraroma und Zimtaroma die größten Bestandteile darstellen, und etwa in der gleichen Menge vorhanden sind, während Koreander und Glühweinaroma insbesondere nur zwischen dem 0,5-fachen und 0,7-fachen des Anteils an Ingweraroma oder Zimtaroma betragen.

Das Orangenaroma sowie Backpflaumenaroma sind vorzugsweise nur mit dem 0,15-fachen des Ingweraromas und/oder Zimtaromas vorhanden.

Ferner enthält das Mischgetränk Zitronensäure und/oder Ascorbinsäure, wobei der Anteil an Zitronensäure zwischen 0,15 Gewichtsprozent und 0,25 Gewichtsprozent bezogen auf die Gesamtmenge beträgt.

Die Menge an Ascorbinsäure liegt bei 20 bis 30 g pro hl der Gesamtmenge.

Dadurch erhält das Mischgetränk einerseits das geschmacklich richtige Gegengewicht zum zugegebenen Zucker und andererseits erhöht dies die Haltbarkeit.

Die angegebenen Aromen sind in dieser flüssigen Form beispielsweise bei Firma Döhler, Darmstadt, erhältlich.

## Patentansprüche

1. Biermischgetränk bestehend aus
- mindestens 90 Vor.-%, besser mindestens 93 Vor.-%, besser mindestens 95 Vor.-% Bier, und
- Zucker in flüssiger Form mit mindestens 2,5 Vol.-%, besser mindestens 3,0 Vol.-%, aber höchstens 5,0 Vol.-%, besser höchstens 4,0 Vol.-%,
- Aroma, das den restlichen Volumenanteil des Biermischgetränkes darstellt.

2. Biermischgetränk nach Anspruch 1,
**dadurch gekennzeichnet, dass**
das Biermischgetränk in dem in der Verkaufsverpackung abgefüllten, kalten Zustand mindestens 200 g CO₂/hl des Biermischgetränkes aufweist, besser mindestens 280 g CO₂/hl, vorzugsweise aber nicht mehr als 400 CO₂/hl, besser nicht mehr als 330g CO₂/hl.

3. Biermischgetränk nach einem der vorhergehenden Ansprüche, **dadurch gekennzeichnet, dass**
der Zuckeranteil in Form eines Zuckersirups, insbesondere als Invertzuckersirup mit einem Zuckergehalt von mindestens 65 Vol.-%, besser mindestens 75 Vol.-%, zugefügt ist.

4. Biermischgetränk nach einem der vorhergehenden Ansprüche, **dadurch gekennzeichnet, dass**
das Bier einen Alkoholgehalt im kalten Zustand von mindestens 8 Vol.-%, besser mindestens 10 Vol.-%, besser mindestens 11 Vol.-% besitzt und insbesondere ein Bockbier ist.

5. Biermischgetränk nach einem der vorhergehenden Ansprüche, **dadurch gekennzeichnet, dass**
das Aroma Glühweinaroma enthält in Höhe von mindestens 0,015 Vol.-%, besser mindestens 0,025 Vol.-% des Biermischgetränks.

6. Biermischgetränk nach einem der vorhergehenden Ansprüche,
**dadurch gekennzeichnet, dass**
das Aroma Zimtaroma, Koreanderaroma und Orangenaroma enthält, insbesondere in Höhe von mindestens 0,05 Vol.-%, besser mindestens 0,06 Vol.-% bezogen auf das Biermischgetränk.

7. Biermischgetränk nach Anspruch 6,
**dadurch gekennzeichnet, dass**
der Anteil an Zimtaroma 1,8 bis 2,2-fach so hoch ist wie der Anteil an Koreanderaroma.

8. Biermischgetränk nach Anspruch 6 oder 7,
**dadurch gekennzeichnet, dass**
der Anteil an Orangenaroma 0,09 bis 0,11-fach dem Anteil an Koreanderaroma und/oder dem 0,04-fachen bis 0,06-fachen des Anteils an Zimtaroma beträgt.

9. Biermischgetränk nach einem der vorhergehenden Ansprüche,
**dadurch gekennzeichnet, dass**
das Aroma Backpflaumenaroma enthält, insbesondere mit einem Anteil des 0,15-fachen bis 0,25-fachen des Anteils an Glühweinaroma.

10. Biermischgetränk nach einem der vorhergehenden Ansprüche,
**dadurch gekennzeichnet, dass**
das Aroma Ingweraroma enthält, insbesondere mit 0,04 Vol.-% bis 0,05 Vol.-% bezogen auf die Menge an Mischgetränk, und/oder zwischen dem 1,5-fachen und 2,0-fachen der Menge an Glühweinaroma.

11. Biermischgetränk nach einem der vorhergehenden Ansprüche,
**dadurch gekennzeichnet, dass**
das Aroma Ingweraroma, Koreanderaroma, Zimtaroma, Glühweinaroma, Backpflaumenaroma, Orangenaroma enthält und zwar insbesondere mit Ingweraroma und Zimtaroma als den größten Bestandteilen, die insbesondere etwa gleich groß sind, während Koreander- und Glühweinaroma insbesondere zwischen dem 0,5-fachen und 0,7-fachen des Anteils an Ingweraroma oder Zimtaroma liegen und insbesondere Orangenaroma sowie Backpflaumenaroma höchstens das 0,15-fache des Ingweraromas und Zimtaromas in Volumenanteilen betragen.

12. Biermischgetränk nach einem der vorhergehenden Ansprüche,
**dadurch gekennzeichnet, dass**
das Biermischgetränk Zitronensäure und/oder Ascorbinsäure enthält und dabei insbesondere der Anteil an Zitronensäure 0,15 Gew.-% bis 0,25 Gew.-% bezogen auf die Menge an Mischgetränk beträgt.

13. Biermischgetränk nach einem der vorhergehenden Ansprüche,
**dadurch gekennzeichnet, dass**
die Ascorbinsäure 20g bis 30g pro hl der Menge an Mischgetränk beträgt.
